**Europäisches Patentamt**

**European Patent Office**

**Office européen des brevets**

(11) Numéro de publication: **0 027 753**
B2

(12) # NOUVEAU FASCICULE DE BREVET EUROPEEN

(45) Date de publication du nouveau fascicule du brevet:
27.09.89

(51) Int. Cl.⁴: **D 06 F 37/20**, F 16 F 7/08

(21) Numéro de dépôt: **80401394.4**

(22) Date de dépôt: **02.10.80**

(54) **Dispositif d'amortissement à double effet, et machine à laver et/ou essorer le linge munie d'un tel dispositif.**

(30) Priorité: **19.10.79 FR 7926046**

(43) Date de publication de la demande:
**29.04.81 Bulletin 81/17**

(45) Mention de la délivrance du brevet:
**06.06.84 Bulletin 84/23**

(45) Mention de la décision concernant l'opposition:
**27.09.89 Bulletin 89/39**

(84) Etats contractants désignés:
**DE GB IT SE**

(56) Documents cités:
**DE-A- 1 460 969**
**DE-A- 2 406 144**
**DE-B- 1 136 974**
**DE-B- 1 211 555**
**DE-U- 1 914 092**
**FR-A- 1 289 955**
**FR-A- 2 058 468**
**US-A- 3 262 661**

**Dubbel "Taschenbuch für den Maschinenbau" 13e Ed.
tome 1, pages 282, 283**

(73) Titulaire: **ESSWEIN S.A., 67, quai Paul-Doumer,
F-92400 Courbevoie (FR)**

(72) Inventeur: **Didier, Laurent, "THOMSON-CSF"
SCPI 173, Bld Haussmann, F-75360 Paris Cedex 08 (FR)**
Inventeur: **Comairas, Gérard, "THOMSON-CSF"
SCPI 173, Bld Haussmann, F-75360 Paris Cedex 08 (FR)**
Inventeur: **Delavaud, Emile, "THOMSON-CSF"
SCPI 173, Bld Haussmann, F-75360 Paris Cedex 08 (FR)**

(74) Mandataire: **Phan, Chi Quy et al, THOMSON-CSF SCPI,
F-92045 PARIS LA DEFENSE CEDEX 67 (FR)**

## Description

La présente invention concerne, un dispositif d'amortissement à double effet et une machine à laver et/ou essorer le linge munie d'un tel dispositif.

Un dispositif d'amortissement de ce type peut s'appliquer à tout autre dispositif oscillant qu'un ensemble mobile constitué par la cuve, le tambour et le moteur d'une machine à laver et/ou à essorer le ligne.

Dans le cas d'une machine à laver le linge, lorsque la vitesse de rotation du tambour augmente pour atteindre la vitesse d'essorage, l'ensemble cuve-tambour-moteur oscille autour d'un point d'équilibre.

L'amplitude de cette oscillation dépend de plusieurs facteurs, c'est-à-dire de paramètres physiques tels que le poids de l'ensemble cuve-tambour-moteur, de la répartition plus ou moins uniforme du linge dans le tambour, des caractéristiques du dispositif d'amortissement, de la vitesse de rotation du tambour. Si tous les paramètres physiques sont fixés à l'avance, l'amplitude des oscillations varie en fonction de la vitesse de rotation jusqu'à atteindre une valeur maximale à la fréquence de résonance de l'ensemble mobile.

Cette fréquence de résonance est habituellement atteinte pour une vitesse de rotation du tambour comprise entre 100 et 200 tours/minute. Les oscillations deviennent plus faibles au-delà de ces vitesses.

Il est courant d'utiliser des dispositifs qui amortissent les oscillations correspondant à la vitesse de résonance. Ces oscillations sont habituellement réduits par prélèvement de l'énergie à l'ensemble en mouvement par des amortisseurs de type connus, tels que des amortisseurs hydrauliques ou à friction, du genre désit dans le brevet FR-A 2 058 468 et DE-A 2 406 144. Ces amortisseurs connus assurent un prélèvement d'énergie mais présentent un inconvénient qui se manifeste par une transmission des moindres oscillations ou vibrations de l'ensemble mobile à la partie fixe de la machine reposant sur le sol. Ces oscillations ainsi transmises engendrent la réaction de celle-ci sur le sol, et, par conséquent, le bruit qui caractérise une machine bruyante.

La présente invention permet de réaliser un dispositif d'amortissement ayant pour effets de réduire les oscillations de l'ensemble mobile par prélèvement d'énergie par frottement uniquement lorsque cela est nécessaire, c'est-à-dire au voisinage de sa fréquence de résonance et d'absorber également ces oscillations.

Les avantages apportés par le dispositif d'amortissement à double effet réalisé selon l'invention et tel que defini dans la revendication 1, dans une application à une machine à laver le linge, sont les suivants: une atténuation des bruits en milieu solide transmis au socle de la machine puis au plancher du local renfermant cette machine; une déperdition d'énergie par frottement relativement faible donc un échauffement moins important et une plus grande longévité du dispositif d'amortissement résultant d'une faible usure d'organes de friction.

La présente invention se comprendra mieux à l'aide des exemples décrits ci-après, illustrés par des dessins ci-annexés qui représentent schématiquement dans

– la figure 1, une vue partielle d'une machine à laver et/ou à essorer le linge, montrant un ensemble mobile oscillant «cuve-tambour-moteur», muni de dispositif d'amortissement conforme à l'invention;
– la figure 2, un amortisseur à friction connu;
– la figure 3, un diagramme représentant la réaction au sol de l'amortisseur de la figure 2, en fonction de l'amplitude d'oscillation d'un ensemble mobile;
– la figure 4, un amortisseur à ressort et à friction connu;
– la figure 5, un diagramme représentant la réaction au sol de l'amortisseur de la figure 4, en fonction de l'amplitude d'oscillation d'un ensemble mobile;
– la figure 6, un dispositif d'amortissement à double effet selon um premier exemple de réalisation de la présente invention;
– la figure 7, un diagramme représentant la réaction au sol du dispositif d'amortissement de la figure 6, en fonction de l'amplitude d'oscillation d'un ensemble mobile;
– la figure 8, un dispositif d'amortissement à double effet selon un deuxième exemple de réalisation de la présente invention;
– la figure 9, un diagramme représentant la réaction au sol du dispositif d'amortissement de la figure 8 en fonction de l'amplitude d'oscillation d'un ensemble mobile.

Dans l'ensemble des figures, les pièces équivalentes sont désignées par les mêmes chiffres de référence.

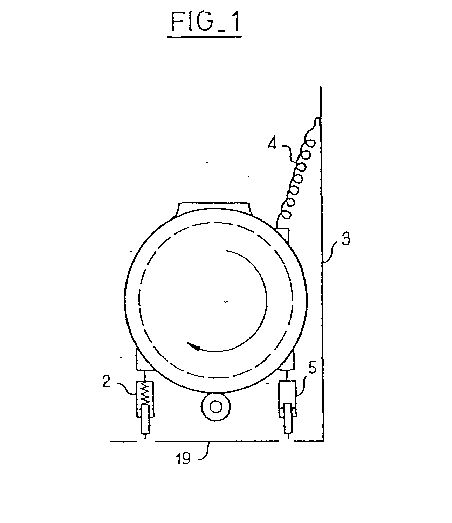

Une machine à laver le linge partiellement et schématiquement illustrée dans la figure 1, comprend, selon l'invention, la partie avant de son ensemble mobile «cuve-tambour-moteur» 1 reposant sur un ou plusieurs dispositifs d'amortissement à double effet 2 et la partie arrière de cet ensemble est suspendue à la paroi arrière 3 de la machine au moyen d'un ou plusieurs ressorts de traction 4 et au socle de la machine par un amortisseur à friction 5 ou un dispositif d'amortissement à double effet.

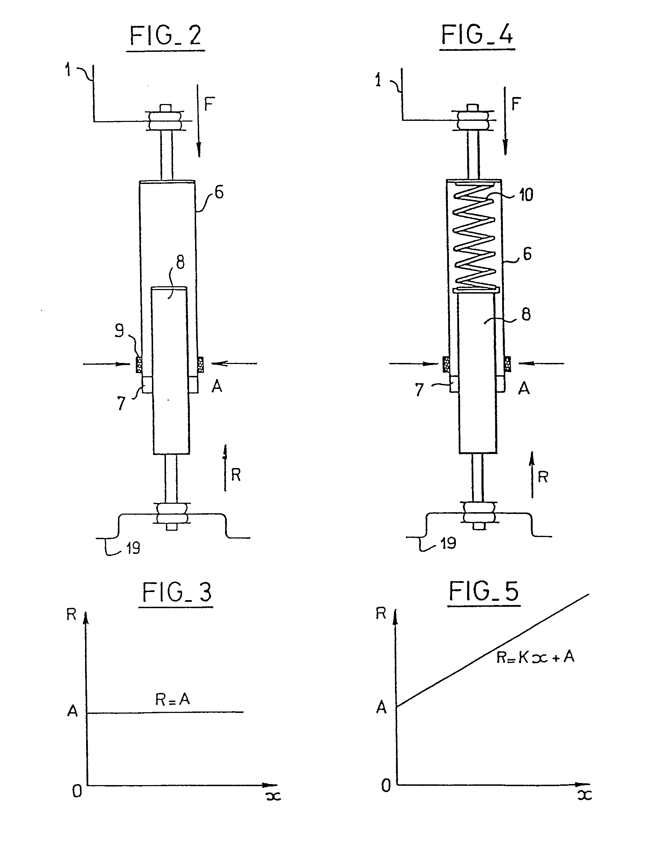

Un amortisseur à friction et un amortisseur à ressort et à friction connus sont respectivement représentés dans les figures 2 et 4 assurant dans une machine une liaison mécanique entre un ensemble mobile 1 et un socle 19 reposant sur le sol.

Ces deux amortisseurs comprennent respectivement un premier sous-ensemble 6 constitué par une pièce tubulaire ajourée portant à son extrémité libre des plaquettes de friction 7 qui enserrent concentriquement un deuxième sous-ensemble 8 constitué par un tube. Un dispositif d'enserrement 9 tel qu'une bague élastique, monté sur l'extrémité libre du sous-ensemble 6 permet de maintenir les plaquettes 7 appliquées avec une force d'enserrement prédéterminée sur le deuxième sous-ensemble tubulaire 8. Le diagramme illustré dans la figure 3 montre la variation de la réaction R, sur le sol, de l'amortisseur, en fonction du déplacement X de l'ensemble mobile 1 par rapport au sol lorsqu'on applique une force verticale F sur le premier sous-ensemble 6. Si A représente la force d'amortissement, c'est-à-dire la force minimum qu'il faut appliquer sur le premier sous-ensemble 6 pour vaincre les forces de frottement et déplacer les plaquettes 7 sur le deuxième sous-ensemble tubulaire 8, la réaction R croît jusqu'à la valeur A. Jusqu'à ce moment les deux sous-ensembles 6 et 8 de l'amortisseur restent immobiles. Lorsque la force F appliquée devient supérieure à A, les plaquettes 7 glissent sur le deuxième sousensemble tubulaire. Cependant la réaction R reste sensiblement constante et égale à A. Selon sa structure ainsi décrite, l'amortisseur à friction de la figure 2 transmet directement les moindres oscillations de l'ensemble mobile 1 au socle 19 lesquelles engendrent le bruit sur réaction de ce socle sur le sol.

L'amortisseur à ressort et à friction connu représenté dans la figure 4 comprend dans ses sous-ensembles, des éléments identiques à ceux des sous-ensembles 6 et 8 de l'amortisseur à friction de la figure 2, ces éléments étant indiqués par les mêmes numéros de référence. Cet amortisseur à ressort et à friction comprend en plus un ressort 10 disposé entre le fond du premier sous-ensemble 6 et l'extrémité libre du deuxième sous ensemble 8.

Le diagramme de la figure 5 représente la variation de la réaction R sur le sol de l'amortisseur à ressort et à friction en fonction du déplacement X de l'ensemble mobile 1, lorsqu'on applique une force verticale F sur le premier sous-ensemble 6. Quand la force F est inférieure à A, les deux sous-ensembles 6 et 8 restent immobiles, puis lorsque la force F devient supérieure à A, la réaction R croît de façon sensiblement linéaire avec le déplacement x de l'ensemble mobile 1.

Si K est une constant du ressort 10, la réaction R s'écrit: $R = Kx + A$ si l'on oppose la compression initiale du ressort 10 nulle.

Les amortisseurs connus ci-dessus (figures 2 et 4) présentent parmi leurs désavantages un inconvénient suivant dans leur application à une machine: quelle que soit l'amplitude des oscillations de l'ensemble mobile 1 et ils les transmettent directement au socle 19 et la réaction de ce dernier au sol rend la machine très bruyante.

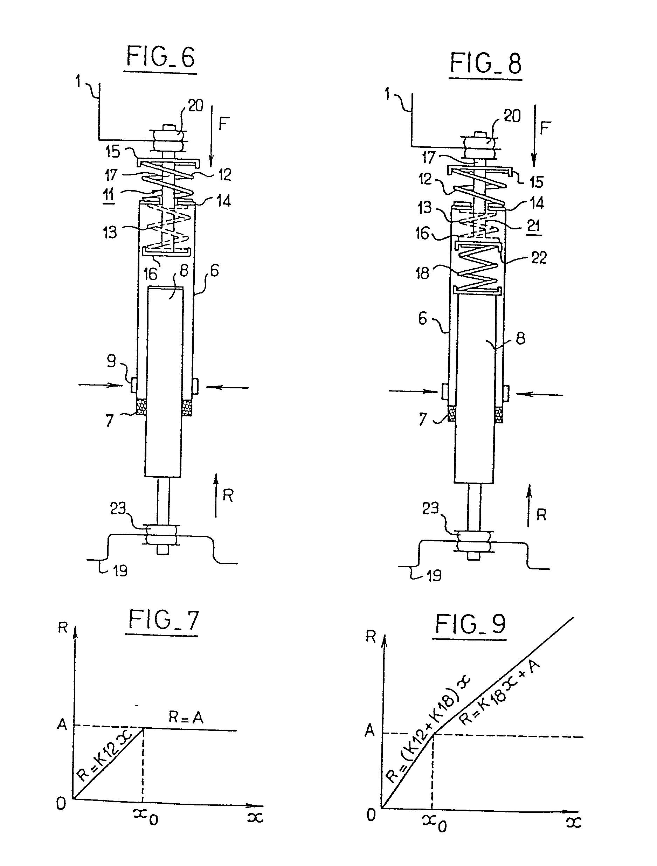

La présente invention permet d'éviter cet inconvénient. Les dispositifs d'amortissement à double effet réalisés selon l'invention et illustrés dans les figures 6 et 8 fournissent un amortissement élevé par prélèvement d'énergie par frottement lorsque l'amplitude des oscillations est important et une absorption efficace des oscillations de faible amplitude de l'ensemble mobile.

Un dispositif d'amortissement à double effet selon un premier exemple de réalisation de l'invention est représenté en trait plein dans la figure 6. Ce dispositif d'amortissement comprend dans ses sous-ensembles, des éléments identiques à ceux des sous ensembles 6 et 8 de l'amortisseur de la figure 2, ces éléments étant indiqués par les mêmes numéros de référence, et en plus, un système élastique 11 d'absorption d'oscillations.

Ce dispositif d'amortissement à double effet comprend en effet un premier sous-ensemble 6 supportant des plaquettes de friction 7. Un dispositif d'enserrement constitué, par exemple, par une bague élastique de serrage 9, applique les plaquettes 7 contre un deuxième sous-ensemble tubulaire 8. Le système 11 d'absorption d'oscillations comprend un ressort 12 disposé entre le premier sous-ensemble 6 et le point d'attache 20 de ce dernier. Ce ressort 12 comprend une extrémité maintenue sur la partie terminale 14 du sous-ensemble 6 et une deuxième extrémité portée par un disque 15 solidaire d'un axe coulissant 17 qui peut se déplacer librement et axialement dans les deux sous-ensembles 6 et 8 du dispositif. Ce ressort 12 peut travailler à la traction et à la compression.

Dans une variante de réalisation représentée dans la figure 6, le système 11 comporte deux ressorts 12 et 13 dont l'un 13 est représenté en traits discontinus, montés autour de l'axe coulissant 17, à l'extérieur et à l'intérieur de la partie terminale 14 du sous-ensemble 6 et retenus respectivement par les disques 15 et 16 solidaires de l'axe coulissant 17.

Le diagramme de la figure 7 représente la variation de la réaction au sol R du dispositif de la figure 6 en fonction du déplacement x de l'axe coulissant 17, déplacement directement lié à l'amplitude des oscillations de l'ensemble mobile 1, cette amplitude étant elle-même fonction de la fréquence des oscillations.

L'amplitude des oscillations reste faible, par exemple inférieure à $x_0$ (figure 7), lorsque la vitesse de rotation du tambour de la machine à laver se trouver en dessous ou en dessus de la vitesse de résonance de l'ensemble mobile 1. La force F s'exerçant verticalement sur l'axe 17 est alors inférieure aux forces de frottement A des plaquettes 7 sur le deuxième sous-ensemble tubulaire 8 et les plaquettes 7 restent immobiles. Cependant les vibrations de l'ensemble oscillant 1 sont absorbées par le système d'absorption 11 et aucune réaction bruyante du socle 19 sur le sol n'est décelée. Lorsque la vitesse du tambour est telle que l'amplitude des oscillations est supérieure à $x_0$, l'ensemble mobile 1 applique alors au premier sous-ensemble 6 une force F supérieure aux forces de frottement des plaquettes 7 sur le deuxième sous-ensemble 8, il y a un déplacement des plaquettes sur ce deuxième sous-ensemble et amortissement des oscillations de l'ensemble 1, par prélèvement d'énergie.

Dans le cas où le système élastique d'absorption 11 ne comporte qu'un seul ressort 12 de constante $K_{12}$, fixé entre le disque 15 et la partie terminale 14 du premier sous-ensemble 6, les oscillations à faible amplitude de l'ensemble mobile 1 qui appliquent une faible force F sur l'axe coulissant 17, provoquent à partir de sa position d'équilibre, un faible déplacement de l'axe 17 et son disque 15.

Tant que cette force F appliquée est inférieure à A, A étant la force de frottement des plaquettes 7 sur le deuxième sous-ensemble tubulaire 8, le système élastique 11 absorbe, seul, les oscillations de l'ensemble mobile 1.

La réaction R absorbée par le système 11 varie linéairement avec le déplacement x de l'ensemble mobile 1. Si l'on ne tient pas compte des forces de compression initiales, $R = K_{12}x$. Pour des vitesses du tambour ne correspondant pas à la fréquence de résonance de l'ensemble mobile, les plaquettes 7 ne se déplacent pas sur le deuxième sous-ensemble 8.

Lorsque la force F appliquée au premier sous-ensemble 6 devient égale ou supérieure aux forces de frottement A des plaquettes 7 sur le deuxième sous-ensemble tubulaire 8, le premier sous-ensemble 6 avec des plaquettes 7, l'axe 17 et le système élastique 11 se déplacent par rapport à ce deuxième sous-ensemble 8.

Les oscillations de l'ensemble mobile 1 sont d'une part absorbées par le système 11 et d'autre part amorties par prélèvement d'énergie par les plaquettes de friction 7.

Selon un deuxième exemple de réalisation de l'invention illustré dans la figure 8, le dispositif comprend en dehors des sous-ensembles 6 et 8 identiques à ceux du dispositif de la figure 6, un système élastique 21 d'absorption d'oscillations constitué de deux ressorts, un ressort 18 de constante $K_{18}$ monté entre un disque 22 solidaire de l'extrémité libre de l'axe coulissant 17 et l'extrémité libre du deuxième sous-ensemble 8 et un ressort 12 monté entre la partie terminale 14 du premier sous-ensemble 6 et le point d'attache 20 de ce dernier.

Les faibles oscillations de l'ensemble mobile 1, sont absorbées par le système d'absorption 21, les forces de frottement des plaquettes 7 sur le tube 8 étant supérieures à la force F appliquée sur le premier sous-ensemble 6. Les plaquettes 7 restent donc immobiles par rapport au deuxième sous-ensemble 8.

La réaction R absorbée par le système d'absorption 21 varie linéairement avec le déplacement x de l'ensemble mobile 1. Cette réaction R s'écrit, en ne tenant pas compte des forces de compression initiales $R = (K_{12} + K_{18})x$.

Lorsque la force F transmise au sous-ensemble 6 est égale ou supérieure à A, c'est-à-dire lorsque l'amplitude des oscillations de l'ensemble mobile est égale ou supérieure à $x_0$ (figure 9), les plaquettes 7 glissent sur le deuxième sous-ensemble 8 et le ressort 12 ne se comprime pas davantage, seul, le ressort 18 continue à se comprimer.

La réaction devient $R = K_{18}x + A$. A ce moment, dans le dispositif de la figure 8, se conjuguent, l'amortissement par prélèvement d'énergie par friction et l'absorption des oscillations par système élastique.

On voit donc d'après ce qui précède que le dispositif d'amortissement à double effet réalisé selon la présente invention permet d'avoir une absorption élastique sans amortissement par prélèvement d'énergie par friction pour les faibles et les fortes vitesses où les oscillations ont une faible amplitude et d'avoir une absorption élastique et un amortissement, par prélèvement d'énergie par friction aux vitesses voisines de la vitesse correspondant à la fréquence de résonance de l'ensemble mobile 1.

Dans une variante de réalisation, le système d'absorption élastique comprend (figure 8) en dehors des ressorts 12 et 18, un ressort 13 représenté en traits discontinus, monté à l'intérieur du premier sous-ensemble 6 entre la partie terminale 14 de ce dernier et un disque 22 solidaire de l'extrémité libre de l'axe 17. Selon l'invention dans le dispositif d'amortissement à double effet, le système d'absorption élastique 11 ou 21 ne s'applique pas seulement aux moyens de prélèvement d'énergie par friction, mais également à tout autre moyen de prélèvement d'énergie, en vue d'un amortissement des oscillations d'un ensemble mobile.

Ce système d'absorption élastique s'applique aussi bien aux dispositifs du type hydraulique on pneumatique.

Dans les exemples illustré ci-dessus, le point d'attache 20 de l'axe coulissant 17 est représenté relié à l'ensemble mobile 1.

Cependant ce point d'attache 20 de l'axe coulissant 17 peut être également relié à une partie fixe de la machine telle que le socle 19 de cette dernière tandis que le point d'attache 23 du deuxième sous-ensemble 8 est fixé à l'ensemble mobile 1.

Selon l'invention, dans le système d'absorption élastique 11 ou 21, les ressorts 12, 13, 18 peuvent être remplacés par des rondelles élastiques en métal.

**Revendications**

1. Dispositif d'amortissement à double effet (2), contribuant à supporter dans une machine, un ensemble mobile (1) sur un socle (19), et pourvu d'un système élastique d'absorption (11, 21), d'un moyen d'amortissement à friction ou d'un moyen hydraulique, ou pneumatique équivalent d'amortissement (7) de la force d'action des oscillations de cet ensemble mobile (1), et de deux points d'attache (20, 23) destinés à relier le dispositif d'amortissement à l'ensemble mobile (1) et au socle (19), le dispositif d'amortissement comprenant un premier sous-ensemble (6) et un deuxième sous-ensemble (8), le premier étant mobile relativement au deuxième et à l'ensemble mobile (1) et au socle (19), le système élastique d'absorption (11, 21) comprenant au moins un organe élastique (12) situé entre le premier sous-ensemble (6) et le point d'attache (20) se trouvant du côté de ce premier sous-ensemble (6) et reliant ce dernier à l'ensemble mobile (1), le deuxième sous-ensemble (8) étant relié au socle (19) par l'autre point d'attache (23), et le moyen d'amortissement étant situé entre le premier sous- ensemble mobile (6) et le deuxième sous-ensemble (8) de manière que soient réalisés, d'une manière continue, une absorption élastique pour des oscillations ayant une amplitude inférieure à une valeur prédéterminée, et une absorption élastique et un amortissement par prélèvement d'énergie de la force d'action des oscillations de l'ensemble mobile (1) pour des oscillations ayant une amplitude supérieure à cette valeur prédéterminée, se traduisant dans une courbe représentative de cette force d'action absorbée et amortie par le dispositif, en fonction de la course des sous-ensembles de ce dispositif, par une absence de tronçon de pente infinie représentant une transmission brutale de cette force d'action par le dispositif, sans déplacement relatif de ces sous-ensembles.

2. Dispositif d'amortissement à double effet (2), contribuant à supporter dans une machine un ensemble mobile (19) sur un socle (1), et pourvu d'un système élastique d'absorption (11, 21), d'un moyen d'amortissement à friction ou d'un moyen hydraulique, ou pneumatique équivalent d'amortissement (7) de la force d'action des oscillations de cet ensemble mobile (19) et de deux points d'attache (20, 23) destinés à relier le dispositif d'amortissement à l'ensemble mobile (19) et au socle (1), le dispositif d'amortissement comprenant un premier sous-ensemble (6) et un deuxième sous-ensemble (8), le premier étant mobile relativement au deuxième et au socle (1) et à l'ensemble mobile (19), le système élastique d'absorption (11, 21) comprenant au moins un organe élastique (12) situé entre le premier sous-ensemble (6) et le point d'attache (23) se trouvant du côté de ce premier sous-ensemble (6) et reliant ce dernier au socle (1), le deuxième sous-ensemble (8) étant relié par l'autre point d'attache (20) à l'ensemble mobile (19) et le moyen d'amortissement étant situé entre le premier sous-ensemble (6) et le deuxième sous-ensemble (8) de manière que soient réalisés, d'une manière continue, une absorption élastique pour des oscillations ayant une amplitude inférieure à une valeur prédéterminée, et une absorption élastique et un amortissement par prélèvement d'énergie de la force d'action des oscillations de l'ensemble mobile (19) pour des oscillations ayant une amplitude supérieure à cette valeur prédéterminée, se traduisant dans une courbe représentative de cette force d'action absorbée et amortie par le dispositif, en fonction de la course des sous-ensembles de ce dispositif, par une absence de tronçon de pente infinie représentant une transmission brutale de cette force d'action par le dispositif, sans déplacement relatif de ces sous-ensembles.

3. Dispositif selon l'une des revendications 1 et 2, dans lequel le moyen d'amortissement est constitué par des plaquettes de friction (7) portées par le premier sous-ensemble (6) et montées déplaçables sur le deuxième sous-ensemble (8), caractérisé en ce que le système d'absorption élastique (21) comprend d'une part un axe (17) monté coulissant axialement librement dans le premier sous-ensemble (6) et dont l'extrémité extérieure constitue un des points d'attache (20) de ce dispositif d'amortissement (2), et d'autre part, deux organes élastiques (12, 18) montés respectivement, l'un (12) entre la partie terminale (14) de ce premier sous-ensemble (6) et un disque (15) solidaire de l'axe coulissant (17) du côté de l'extrémité extérieure de cet axe constituant le point d'attache (20) de ce dispositif d'amortissement (2), et l'autre (18) entre l'extrémité du deuxième sous-ensemble (8), et un disque (22) solidaire de l'extrémité intérieure de cet axe coulissant (17).

4. Dispositif selon l'une des revendications 1 et 2, dans lequel le moyen d'amortissement est constitué par des plaquettes de frictions (7) portées par le premier sous-ensemble (6) et montées déplaçables sur le deuxième sous-ensemble (8), caractérisé en ce que le système d'absorption élastique (21) comprend d'une part un axe (17) monté coulissant axialement librement dans le premier sous-ensemble (6) et dont l'extrémité extérieure constitue un des points d'attache (20) de ce dispositif d'amortissement (2) et d'autre part, trois organes élastiques (12, 13, 18) dont deux (12, 13) sont maintenus, à une de leurs extrémités contre les surfaces extérieure et intérieure de la partie terminale (14) de ce premier sous-ensemble (6), et à leur deuxième extrémité, respectivement par les disques (15, 16) solidaires de cet axe coulissant (17), et dont le troisième est monté entre l'extrémité du deuxième sous-ensemble (8) et un disque (22) solidaire de l'extrémité intérieure de cet axe coulissant (17).

5. Dispositif selon l'une quelconque des revendications 1 à 4, caractérisé en ce que, dans le système d'absorption élastique (11), l'organe élastique (12, 13, 18) est constitué par un ressort.

6. Dispositif selon l'une quelconque des revendications 1 à 4, caractérisé en ce que, dans le système d'absorption élastique (11), l'organe élastique (12, 13, 18) est constitué par des rondelles métalliques élastiques.

7. Machine à laver et/ou à essorer le linge, caractérisée en ce qu'elle comprend des dispositifs d'amortissement à double effet (2) selon l'une des revendications 1 à 6, montés entre son ensemble mobile «cuve-tambour-moteur» (1) et sa partie fixe telle que le socle (19).

**Patentansprüche**

1. Doppeltwirkende Dämpfungsvorrichtung (2), die dazu beiträgt, in einer Maschine eine bewegliche Einheit (1) auf einem Sockel (19) zu halten, mit einem elastischen Absorptionssystem (11, 12), einer Reibungs-Dämpfungseinrichtung oder einer gleichwertigen hydraulischen oder pneumatischen Dämpfungseinrichtung (7) für die Wirkkraft der Schwingungen der beweglichen Einheit (1) und zwei Befestigungspunkten (20, 23) zur Verbindung der Dämpfungsvorrichtung mit der beweglichen Einheit und dem Sockel (19), wobei die Dämpfungsvorrichtung eine erste (6) und eine zweite (8) Teileinheit aufweist, wobei die erste bezüglich der zweiten Teileinheit und der beweglichen Einheit (1) und dem Sockel (19) beweglich ist, wobei das elastische Absorptionssystem (11, 21) wenigstens ein elastisches Element (12) zwischen der ersten Teileinheit (6) und dem Befestigungspunkt (20) aufweist, der sich auf der Seite der ersten Teileinheit (6) befindet und sie mit der beweglichen Einheit (1) verbindet, und wobei die zweite Teileinheit (8) durch den anderen Befestigungspunkt mit dem Sockel (19) verbunden ist, und wobei sich die Dämpfungseinrichtung zwischen der ersten beweglichen Teileinheit (6) und der zweiten (8) befindet, so dass kontinuierlich eine elastische Absorption für Schwingungen mit einer Amplitude unter einem vorbestimmten Wert erreicht wird sowie eine elastische Absorption und Dämpfung durch Energieentnahme von der Wirkkraft der Schwingungen der beweglichen Einheit (1) für die Schwingungen mit einer Amplitude über diesem vorbestimmten Wert, was sich in einer repräsentativen Kurve für diese durch die Vorrichtung absorbierte und gedämpfte Wirkkraft in Abhängigkeit von dem Hub der Teileinheiten der Vorrichtung durch das Fehlen eines Abschnittes mit unendlicher Steigung zeigt, was eine abrupte Übertragung dieser Wirkkraft durch die Vorrichtung ohne relative Verschiebung ihrer Teileinheiten darstellt.

2. Doppeltwirkende Dämpfungsvorrichtung (2), die dazu beiträgt, in einer Maschine eine bewegliche Einheit (19) auf einem Sockel (1) zu halten, mit einem elastischen Absorptionssystem (11, 21), einer Reibungs-Dämpfungseinrichtung oder einer gleichwertigen hydraulischen oder pneumatischen Dämpfungseinrichtung (7) für die Wirkkraft der Schwingungen der beweglichen Einheit (19) und zwei Befestigungspunkten (20, 23) zur Verbindung der Dämpfungsvorrichtung mit der beweglichen Einheit (19) und dem Sockel (1), wobei die Dämpfungsvorrichtung eine erste (6) und eine zweite (8) Teileinheit aufweist, wobei die erste bezüglich der zweiten und der beweglichen Einheit (19) und dem Sockel (1) beweglich ist, wobei das elastische Absorptionssystem (11, 21) wenigstens ein elastisches Element (12) zwischen der ersten Teileinheit (6) und dem Befestigungspunkt (23) aufweist, der sich auf der Seite der ersten Teileinheit (6) befindet und sie mit dem Sockel (1) verbindet, und wobei die zweite Teileinheit (8) durch den anderen Befestigungspunkt (23) mit der beweglichen Einheit (19) verbunden ist, und wobei sich die Dämpfungseinrichtung zwischen der ersten beweglichen Teileinheit (6) und der zweiten Teileinheit (8) befindet, so dass kontinuierlich eine elastische Absorption für Schwingungen mit einer Amplitude unter einem vorbestimmten Wert erreicht wird sowie eine elastische Absorption und Dämpfung durch Energieentnahme von der Wirkkraft der Schwingungen der beweglichen Einheit (19) für die Schwingungen mit einer Amplitude über diesem vorbestimmten Wert, was sich in einer repräsentativen Kurve für diese durch die Vorrichtung absorbierte und gedämpfte Wirkkraft in Abhängigkeit von dem Hub der Teileinheiten der Vorrichtung durch das Fehlen eines Abschnitts mit unendlicher Steigung zeigt, was eine abrupte Übertragung dieser Wirkkraft durch die Vorrichtung ohne relative Verschiebung ihrer Teileinheiten darstellt.

3. Vorrichtung nach einem der Ansprüche 1 und 2, in der die Dämpfungseinrichtung durch Reibungsscheiben (7), die auf der ersten Teileinheit (6) befestigt und auf der zweiten Teileinheit (8) verschiebbar befestigt sind, dadurch gekennzeichnet, dass das elastische Absorptionssystem (21) einerseits eine Achse (17) aufweist, die in axialer Richtung frei in der ersten Teileinheit (6) verschiebbar gelagert ist, und deren äusseres Ende einen der Befestigungspunkte (20) der Dämpfungsvorrichtung (2) bildet, und andererseits zwei elastische Elemente (12, 18), von denen das eine (12) zwischen dem Endbereich (14) der ersten Teileinheit (6) und einer Scheibe (15), die fest mit der verschiebbaren Achse (17) nahe am äusseren Ende der Achse, das den Befestigungspunkt (20) der Dämpfungsvorrichtung (2) bildet, verbunden ist, und das andere (18) zwischen dem Ende der zweiten Teileinheit (8) und einer Scheibe (22), die fest mit dem inneren Ende der verschiebbaren Achse (17) verbunden ist, gelagert ist.

4. Vorrichtung nach einem der Ansprüche 1 und 2, in der die Dämpfungseinrichtung durch Reibungsscheiben (7) gebildet ist, die von der ersten Teileinheit (6) gehalten werden und auf der zweiten Teileinheit (8) verschiebbar montiert sind, dadurch gekennzeichnet, dass das elastische Absorptionssystem (21) einerseits eine Achse (17) aufweist, die in axialer Richtung frei in der ersten Teileinheit (6) verschiebbar gelagert ist und deren äusseres Ende einen der Befestigungspunkte (20) der Dämpfungsvorrichtung (2) bildet, und andererseits drei elastische Elemente (12, 13, 18), von denen zwei (12, 13) an einem ihrer Enden gegen die Aussen- und Innenflächen des Endbereichs (14) der ersten Teileinheit (6) und an ihrem zweiten Ende jeweils durch die fest mit der verschiebbaren Achse (17) verbundenen Scheiben (15, 16) gehalten werden, und von denen das dritte zwischen dem Ende der zweiten Teileinheit (8) und einer fest mit dem inneren Ende der verschiebbaren Achse (17) verbundenen Scheibe (22) montiert ist.

5. Vorrichtung nach einem der Ansprüche 1 bis 4, dadurch gekennzeichnet, dass das elastische Element (12, 13, 18) in dem elastischen Absorptionssystem (11) durch eine Feder gebildet ist.

6. Vorrichtung nach einem der Ansprüche 1 bis 4, dadurch gekennzeichnet, dass das elastische Element (12, 13, 18) in dem elastischen Absorptionssystem (11) durch elastische Scheiben aus Metall gebildet ist.

7. Maschine zum Waschen und/oder Schleudern von Wäsche, dadurch gekennzeichnet, dass sie doppeltwirkende Dämpfungsvorrichtungen (2) nach einem der Ansprüche 1 bis 6 aufweist, die zwischen der Kombination der beweglichen Einheit aus «Wanne-Trommel-Motor» (1) und ihrem festen Teil wie dem Sockel (19) montiert sind.

**Claims**

1. A double acting shock absorber device (2) forming part of the support means in a machine for a mobile assembly (1) on a base (19) and provided with an elastic absorbing system (11 and 21), with a friction shock absorbing means or with a hydraulic or pneumatic means (7) with an equivalent shock absorbing effect as regards the force of action of oscillations of the said mobile assembly (1), and with two attachment points (20 and 23) intended to connect the shock absorbing device to the mobile assembly (1) and to the base (19), the shock absorbing device comprising a first sub-assembly (6) and a second sub-assembly (8), the first of these being mobile in relation to the second and to the mobile assembly (1) and to the base (19), the elastic shock absorbing system (11 and 21) comprising at least one elastic member (12) placed between the first sub-assembly (6) and the point of attachment (20) placed at the side of this first sub-assembly (6) and connecting the latter with the mobile assembly (1), the second sub-assembly (8) being connected with the base (19) by dint of the other point of attachment (23) and the shock absorbing means being situated between the first mobile sub-assembly (6) and the second sub-assembly (8) so as to continuously effect elastic absorption of the oscillations with an amplitude lower than a given value, and elastic absorption and shock absorption by taking up energy of the force of action of the oscillations of the mobile assembly (1) for oscillations having an amplitude in excess of this given value, same being translated in a curve representing this action force absorbed and damped by the device, as a function of the motion of the sub-assemblies of the device, by an absence of the infinite slope section representing a crude transmission of this action force by the device, without relative shift of the sub-assemblies.

2. The double acting shock absorbing device (2) forming part of the support means in a machine for a mobile assembly (a) on a base (1) and provided with an elastic absorbing system (11 and 21), with a friction shock absorbing means or with a hydraulic or pneumatic means (7) with an equivalent shock absorbing effect as regards the force of action of oscillations of the said mobile assembly (19), and with two attachment points (20 and 23) intended to connect the shock absorbing device to the mobile assembly (19) and to the base (1), the shock absorbing device comprising a first sub-assembly (6) and a second sub-assembly (8), the first of these being mobile in relation to the second and to the base (1) and to the mobile assembly (19), the elastic shock absorbing system (11 and 21) comprising at least one elastic member (12) placed between the first sub-assembly (6) and the point of attachment (23) placed at the side of this first sub-assembly (6) and connecting the latter with the base (1), the second sub-assembly (8) being connected with the base (1) by dint of the other point of attachment (23) with the mobile assembly (19) and the shock absorbing means being situated between the first mobile sub-assembly (6) and the second sub-assembly (8) so as to continuously effect elastic absorption of the oscillations with an amplitude lower than a given value, and elastic absorption and shock absorption by taking up energy of the force of action of the oscillations of the mobile assembly (19) for oscillations having an amplitude in excess of this given value, same being translated in a curve representing this action force absorbed and damped by the device, as a function of the motion of the sub-assemblies of the device, by an absence of the infinite slope section representing a crude transmission of this action force by the device, without relative shift of the sub-assemblies.

3. The device as claimed in either of claims 1 and 2 wherein the shock absorbing means is constituted by friction pads (7) borne on the first sub-assembly (6) and shiftingly mounted on the second sub-assembly (8), characterized in that the elastic absorption system (21) comprises on the one hand a shaft (17) mounted in an axially sliding manner in the first sub-assembly (6) so that its exterior end constitutes one of the points (20) of attachment of this shock absorbing device (2) and on the other hand two elastic members (12 and 18) mounted, respectively, on the one hand between the terminal part (14) of this first sub-assembly (6) and a disk (15) fixed to the sliding shaft (17) on the side of the exterior end of this shaft constituting the point (20) of attachment of the shock absorbing device (2), and on the other hand between the end of the second sub-assembly (8) and a disk (22) secured to the interior end of this sliding shaft (17).

4. The device as claimed in either of the claims 1 and 2 wherein the shock absorbing means is constituted by friction pads (7) borne by the first sub-assembly (6) and shiftingly mounted on the second sub-assembly (8), characterized in that the elastic shock absorbing system (21) comprises on the one hand a shaft (17) mounted for free axial sliding motion in the first sub-assembly (6) so that its exterior end constitutes one of the points (20) of attachment of the shock absorbing device (2) and on the other hand three elastic members (12, 13 and 18) of which two (12 and 13) are held with one of their respective ends against the exterior and interior surfaces of the terminal part (14) of this first sub-assembly (6), and being held at their second end respectively by disks (15 and 16) secured to this sliding shaft (17), and of which the third one is mounted between the end of the second sub-assembly (8) and a disk (22) secured to the interior end of the sliding shaft (17).

5. The device as claimed in any of the claims 1 through 4, characterized in that in the elastic absorption system (11) the elastic member (12, 13 and 18) is constituted by a spring.

6. The device as claimed in any one of the claims 1 through 4, characterized in that in the elastic absorption system (11) the elastic member (12, 13 and 18) is constituted by resilient metal washers.

7. A washing and/or drying machine, characterized in that it comprises double acting shock absorbing devices (2) in accordance with any one of the claims 1 through 6 placed between its mobile «vat-drum-motor» assembly (1) and its fixed part such as the base (19).

## FIG_1

## FIG_2

## FIG_4

## FIG_3

$$R = A$$

## FIG_5

$$R = K x + A$$

FIG_6

FIG_8

FIG_7

FIG_9